# EUROPEAN PATENT APPLICATION

(11) **EP 1 555 444 A2**
(43) Date of publication of application: **20.07.2005**
(21) Application number: 05250146.7
(22) Date of filing: 13.01.2005
(51) Int. Cl.: F16B 43/00, F16B 39/10

(54) **Washer, fastener provided with such a washer, method of and power tool for fastening objects with same**

(30) Priority: 15.01.2004 US 758319; 16.01.2004 US 759488
(71) Applicant: Junkers, John K., Saddle River, New Jersey 07458 (US)
(72) Inventor: Junkers, John K., Saddle River, New Jersey 07458 (US)
(74) Representative: Hanson, William Bennett

(57) **Abstract**

A washer (1) has a body (2) having at least one inner segment (6) arranged to cooperate with a fastener which has a rod with one end connectable toward one side of an object to be tightened or loosened and another end to extend to another side of the object and having at least one thread portion for engagement by a nut, the body (2) being arranged to enhance a cooperation between the at least one inner segment (6) and the another end of the rod underneath the at least one thread portion to create a friction between the at least one inner segment and that other end of the rod, the body (2) having an axis (A₁) and being provided with a first outer surface (3) located at one axial side and adapted to cooperate with the nut threadingly connected with the rod on the other end, with a second outer surface (4) located at an opposite axial side and adapted to cooperate with the object, and with at least one inner surface (5) adapted to cooperate with the at least one inner segment (6), so that when a tool is applied and the nut is turned by the tool to overcome a thread friction with the rod, and the rod wants to turn along while a holding force holds the body (2) stationary, the at least one inner segment (6) stops the rod from turning so that any further turning of the nut elongates or relaxes the rod in an axial direction to tighten or loosen the rod by elongating or relaxing the rod. Also, a method and a power tool for tightening and loosening with the use of the washer (1) is proposed.

## Description

The present invention relates to a washer, a fastener provided with a washer, and a method of and a power tool for fastening objects.

It is known to fasten objects with one another with power tools which use fasteners having a multi-part replacement nut, for example including an inner sleeve, an outer sleeve, and a washer. Such a replacement nut is disclosed for example in US-A-5,341,560. Another replacement nut is disclosed in US-B-6,254,323 in which a bolt has a spline underneath its upper thread, to which a washer is nonrotatably connected, and the bolt also has engaging means for applying a reaction force, while an active force of the same tool turns the nut on the bolt thread and the washer face. In the fastener disclosed in both above mentioned patents, the common features are the use of the action and reaction force of one tool, the elimination of reaction arms on power tools, the conversion of torque to torsion-free bolt stretching and obtaining for the first time the desired residual bolt load rather than a torque, which is estimated based on calculated frictions rather than on actual frictions or a tension, which is based on estimated bolt relaxation when the force is transmitted from the elongated bolt to the hand-tight nut.

Some solutions are disclosed in my patent applications nos. EP-A-1318316, EP-A-1348878 and US-A-2003/0198533. The washers disclosed in these patent documents had a third turning resistant surface, which provided a turning resistant surface to the thread portion of the bolt or stud. Yet, as there are bolts or studs, which have merely a thread portion for engagement by a nut and are round underneath, the washer disclosed in these patent applications did not cover this possibility as well. It is therefore believed to be advisable to provide such a washer, a fastener with a washer, a method of and a power tool for fastening objects, which address all threaded rods and all bolts and studs with a thread provided for the nut and, not only with a thread portion, but also with a round portion underneath, so that instead of having to replace the entire washer, merely a segment of the washer has to be replaced.

Accordingly, it is an object of the present invention to provide a washer, a fastener provided with the washer, and a method of and a power tool for fastening of objects which are further improvements of the existing solutions.

In keeping with these objects and with others which will become apparent hereinafter, one aspect of the present invention resides, briefly stated, in a washer according to claim 1.

Another aspect of the present invention provides a fastener according to claim 34.

In accordance with a further aspect of the present invention, a method of tightening and loosening of a fastener in an object is provided according to claim 35.

In accordance with still a further aspect of the present invention, a power tool according to claim 36 is provided.

Preferred or optional features of the invention are set out in the dependent claims.

When the washer, fastener and power tool are designed and the method is performed in accordance with the present invention, the highly advantageous results provided by the present invention can be accomplished when used with all threaded rods and all bolts and studs which have an additional thread located underneath a thread portion for the nut, and also with those which do not have an additional thread portion provided underneath the thread portion for the nut but instead have a round portion underneath the thread portion for the nut, so that instead of having to replace the entire washer, merely the segment has to be replaced.

Industries will keep the inventive washer in stock in the same manner as they keep bolts and nuts in stock. There are industries that only use threaded rods. For those industries the at least one segment is also threaded to engage a threaded portion underneath the nut. There are also industries that use both threaded rods with just a threaded portion for engagement by the nut and are otherwise round. For those industries, the washer in accordance with the present invention is adjustable to the particular rod to which it is applied, so as to reduce inventory for customers. As explained in the preceding paragraph the at least one segment is replaceable, so that a segment formed for a thread engagement underneath the threaded portion for the nut is replaceable with at least one segment formed for a round bar engagement or in other words for a non-threaded portion underneath of the nut. There are also industries that use only rods with just a threaded portion for engagement by the nut and are otherwise round. For those industries the at least one segment is adapted to the round portion of the rod. Depending on the applications, the cost of the rod, and the maintenance intervals, the at least one segment can be just round, or formed to bite into the round portion of the rod underneath the thread portion for the nut, so as to stop the rod from turning along with the nut.

It should be mentioned that the rod in the present invention is an element which can formed as a stud, a screw, a pin, a rod with a threaded end, or a threaded rod or the like. The fasteners can have rods which have a threaded portion on at least one end just for the nut engagement and are otherwise round. Some fasteners are threaded rods from one end to the other. Some fasteners have a threaded portion on both ends for the nut and are in between those threaded portions tapered round. Some fasteners are welded at one end to one side of an object and extend to the other side of the object with at least one threaded portion for engagement of a nut.

The object to be fastened in the present invention can be a flange, a case, a wheel, an attachment of one part to another, a connection of at least two parts, etc.

During the operation the nut provides a turning friction to the first outer surface of the body of the washer when turned, the object provides a turning resistance to the second outer surface of the body of the washer, and the at least one inner surface of the body provides a turning resistance to the segment, which in turn provides a turning resistance to the rod, when a holding force is applied to the body.

The holding force to stop the body of the washer from turning is not always necessary when the second outer surface of the body of the washer rests on a static object. However, as the static friction is not reliable, a holding force should be applied to the body even if it is temporarily not required.

The tool, the action force of which turns the nut and which equal and the opposite reaction force of which holds the body stationary, will be unable to turn the body. The turning friction provided on the first outer surface by the nut is equalled out because the body and thus the first outer surface receive an equal force in the opposite direction. The drag friction applied to the rod by the turning nut wants to turn the segment and thus the body in the nut turning direction, while the reaction force applied to the body wants to turn the body and thus the segment in the opposite direction, which in turn equals them out. The static friction between the second outer surface and the object is what keeps the body stationary if equal and opposite forces are applied simultaneously to the nut and the body. In other words, if the rod does not turn along with the nut, the nut applies merely a turning friction to the first outer surface of the body, which is equalled out by the equal and opposite force applied to the body, so that the body remains stationary because of the static friction of the second outer surface. As the part with the least resistance turns when equal and opposite forces are applied to the parts, only the nut turns.

The invention, both as to its construction and its method of operation, together with additional objects and advantages thereof, will be best understood from the following description of specific embodiments, given by way of example only, when read in connection with the accompanying drawings, in which:

Figures 1a and 1b are a plan view and a cross-section of a washer in accordance with the present invention;

Figures 2a and 2b are views substantially corresponding to the views of Figures 1a and 1b but showing a washer in accordance with another embodiment of the present invention;

Figure 3 is a view showing a fastener provided with the washer shown in Figures 1 and 2 in accordance with the present invention;

Figure 3a is a view substantially corresponding to the view of Figure 3 but showing the fastener in accordance with another embodiment of the present invention;

Figure 4 is a view illustrating a method of fastening and a power tool for fastening with the washer and fastener shown in Figures 1, 2 and 3 correspondingly;

Figure 5 is a view showing a cross-section of a washer in accordance with a further embodiment of the present invention;

Figure 6 is a plan view of a washer in accordance with still a further embodiment of the present invention;

Figure 7 is a plan view of a washer in accordance with an additional embodiment of the present invention;

Figure 8 is a view showing a section of the inventive washer shown in Figure 7;

Figure 9 is a view showing a washer in accordance with still an additional embodiment of the present invention;

Figure 10 is a view showing a section of the inventive washer of Figure 9;

Figure 11 is a plan view of a washer in accordance with another embodiment of the present invention;

Figure 12 is a view showing a cross-section of the washer shown in Figure 11;

Figure 13 is a view showing a washer in accordance with a further embodiment of the present invention;

Figure 14 is a plan view of a washer in accordance with still a further embodiment of the present invention; and

Figure 15 is a view showing a cross-section of a washer in accordance with a further embodiment of the present invention.

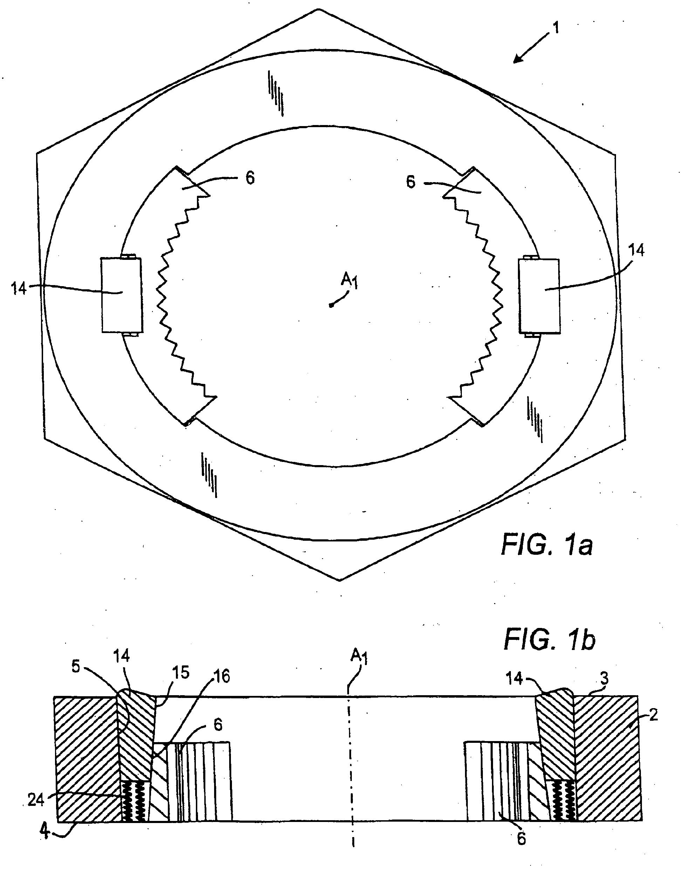

Figures 1a and 1b show a washer in accordance with the present invention, which is identified as a whole with reference numeral 1. The washer 1 has a body which is identified with reference numeral 2. The body 2 of the washer 1 has an axis A₁, a first outer surface 3 located at one axial side and adapted to cooperate with a nut which is threadingly connected with a rod, a second outer surface 4 located at an opposite axial side and adapted to cooperate with an object, and an inner surface 5. The washer 1 further has at least one inner segment 6 (in the embodiment of Figures 1a and 1b the washer has two inner segments 6) adapted to cooperate with a fastener having a rod. The body 2 of the washer is arranged to enhance the cooperation between the inner segments 6 in the body and an end of the rod. In particular, as will be explained herein below, the rod of the fastener has one end connectable to one side of the object to be tightened or loosened, and another end extending to the other side of the object. The body of the washer enhances the cooperation between the inner segments 6 and the other end of the rod.

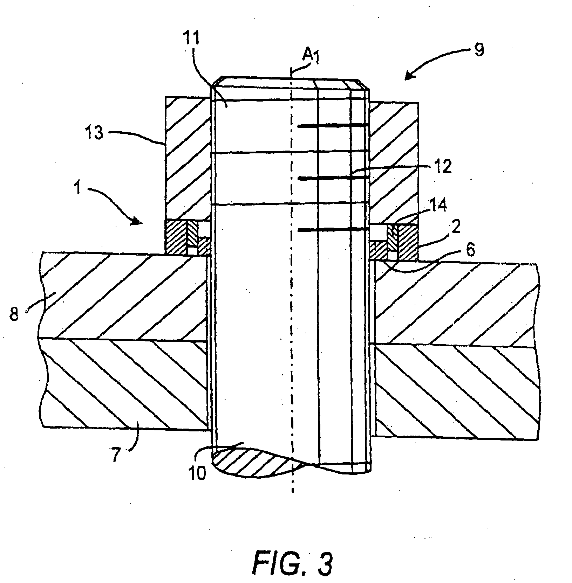

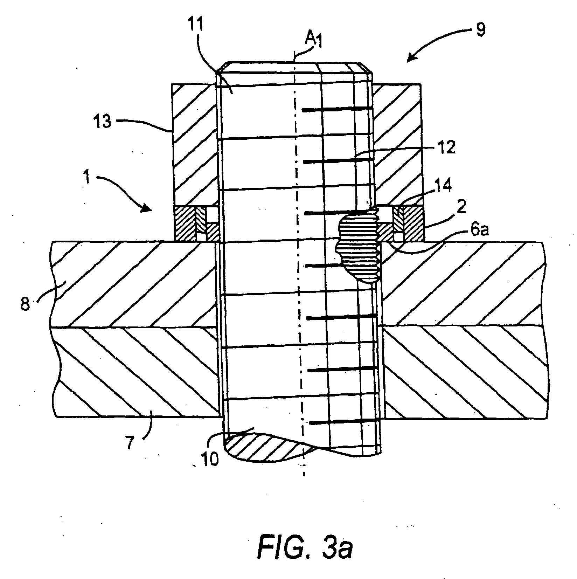

Figure 3 shows an object which includes for example two plates 7 and 8 to be fastened together. The rod is identified with reference numeral 9 and has one end 10 connectable to one side of the object 7, 8 to be tightened or loosened, and another end 11 extending to the other side of the object 7, 8 and having at least one thread portion 12. A nut 13 engages the thread portion 12 of the rod 9.

The washer 1 is provided with means for changing a contact between the inner segments 6 and the other end 11 of the rod 9. The contact changing means include at least one movable member 14 (in Figures 1a,1b there are two movable members 14) extending over a contour of the body 1 of the washer at one end of the movable member 14. As shown in Figure 1b, each movable member 14 can be substantially wedge-shaped. In particular, it has an inner surface 15 which is inclined toward the axis A₁ and cooperates with an outer surface 16 of the segment 6, which outer surface is also correspondingly inclined to the axis A₁. In an initial position shown in Figure 1b, the upper end of the movable members 14 extends upwardly beyond the first outer surface 3 of the body 2 of the washer.

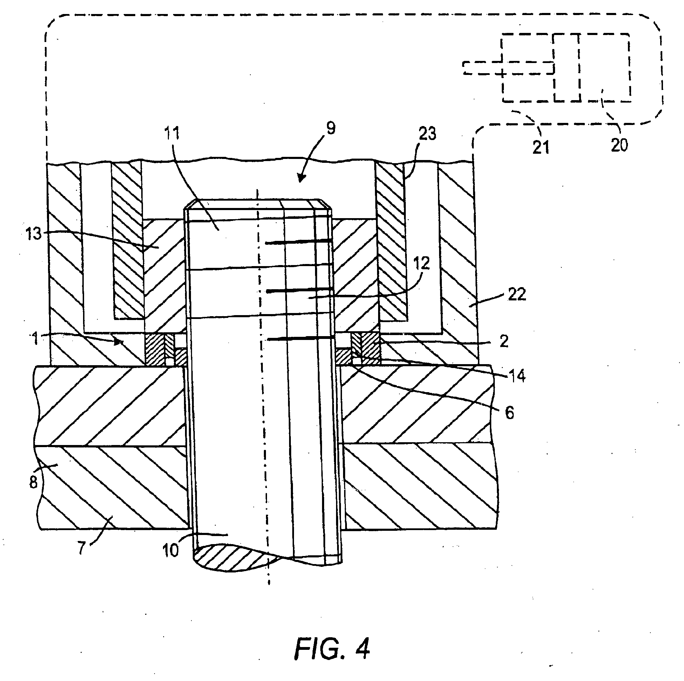

A power tool in accordance with the present invention is shown in Figure 4. The power tool has a tool part which includes a schematically shown power drive which is identified with reference numeral 20 and can be formed as a fluid-operated drive including a cylinder and a piston movable in the cylinder and provided with a piston rod whose reciprocating movement is converted into a rotary movement of a ratchet, as disclosed for example in my US-A-5,499,558. The power tool further has a fastener part which is formed as the fastener shown in Figure 3 and including the washer 1, the rod 9, and the nut 13. The tool part has a housing 21 with an immovable projection 22 which engages the washer 1 so as to provide a holding force for holding the body 2 of the washer stationary. For this purpose, the immovable projection 22 can have an inner polygonal contour which corresponds to the outer polygonal contour of the body 2. The tool part further has an inner projection 23 which is turnable by the ratchet and engages the nut 13 so as to turn the nut. For this purpose the movable projection 23 can have an inner polygonal surface which corresponds to the outer polygonal surface of the nut 13.

For tightening a fastener in the object; the rod 9 is introduced into the object 7, 8, so that one end of the object is connectable to one side of the object, for example by a not shown nut provided on the end 10, a washer is placed on the rod 9 so that the outer surface 4 of the body of the washer is placed on the top surface of the plate 8 of the object, the nut 13 is screwed on the end 11 of the rod 9, the immovable projection 22 engages the outer surface of the body 2 of the washer 1, the turnable projection 23, under the action of the drive 20 is turned to turn the nut 13, and the rod 9 wants to turn along while the counter holding force applied by the immovable projection 22 holds the body 2 of the washer stationary, the inner segments 6 create a friction on the end 11 of the rod 9 to stop the rod 9 from turning, and any further turning of the nut 13 elongates or relaxes the rod 9 in an axial direction to tighten or loosen the rod 9 in the objects 7, 8, and so that the inner segments 6 move in the axial direction in the inner surface 5 of the body 2 when the rod 9 elongates or relaxes.

During tightening of the rod 9 when the inner segments 6 are displaced axially upwardly in Figure 1b, due to the wedging action between the inner inclined surfaces 15 of the movable members 14 and the outer inclined surface 16 of the segments 6, the segments 6 are pushed radially inwardly and the friction between the segments 6 and the rod 9 increases so that the turning of the rod 9 is reliably prevented.

When the washer 1 is put on the rod 9 before operation, a contact between the inner segments 6 and the end 11 of the rod is smaller because the movable members 14 are not completely pushed downwardly into the body 2 but instead their ends extend upwardly beyond the outer surface 3 of the body. This smaller contact facilitates putting the washer 1 onto the rod 9. However, when the nut 13 is applied onto the washer 1 and the movable members 14 are pushed downwardly into the body 2 of the washer, the contact between the segments 6 and the end 11 of the rod 9 is increased. When the washer 1 is to be taken off from the rod 9, the movable members 14 can be again pushed upwardly, for example by springs 24, so that the contact between the inner segments 6 and the end 11 of the rod 9 is decreased and the washer 1 can be easily taken off the rod 9.

The second outer surface 4 of the body 2 can be frictionally enhanced, for example, by providing the object 7, 8 to be stationary. On the other hand, the first outer surface 3 of the body 2 can be frictionally reduced, for example by applying lubricant to the surface 3.

In the embodiments shown in Figures 1a, 1b, 3 and 4 the inner segments 6 of the washer 1 have inner surfaces which are not threaded, while the rod 9 on its end 11 is provided with at least one thread portion 12 engaged by the nut 13, and the rod 9 on its end 11 also has a non-threaded or smooth portion located under the thread portion 12. The segments 6 with their inner non-threaded surfaces cooperate with the above mentioned non-threaded surface of the end 11 of the rod 9, located underneath the thread portion 12 of the rod 9.

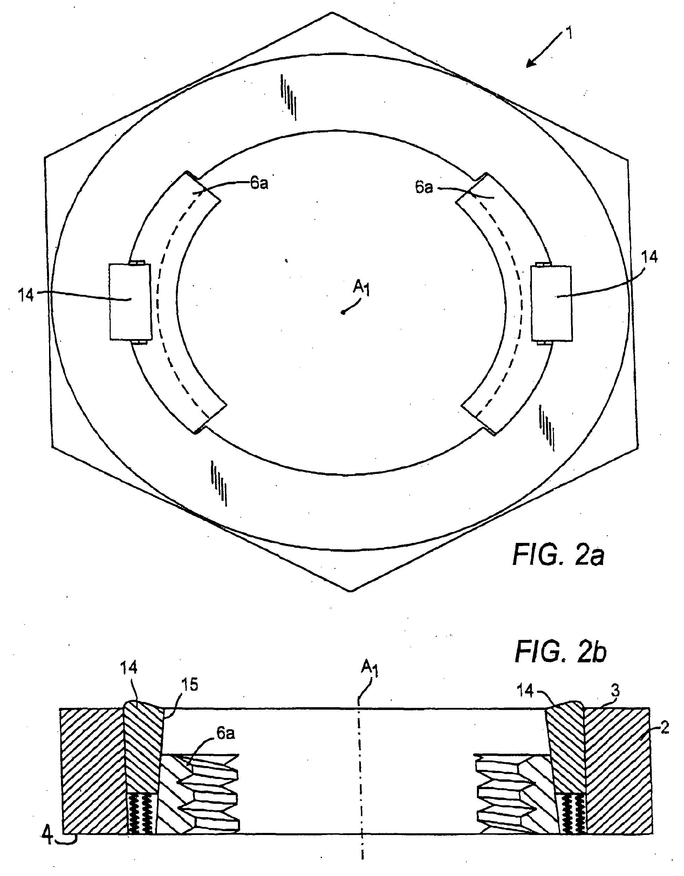

In contrast, in the embodiment shown in Figures 2a and 2b, the inner segments 6a of the washer 1 have inner surfaces which are threaded. As can be seen from Figure 3a, the threaded inner surfaces of the inner segments 6a cooperate with the end 11 of the rod 9, and in particular with a thread of the thread portion of the end 11 of the rod 9 which is located under the first mentioned thread portion 12 engaged by the nut 13.

While in the embodiments shown in Figures 1a, 1b a friction is created between the non-threaded inner surfaces of the segments 6 of the washer 1 and the non-threaded outer surface of the end 11 of the rod 9, in the embodiment shown in Figures 2a, 2b a friction is created between the inner threaded surfaces of the segments 6a and the outer threaded surface of the end 11 of the rod 9

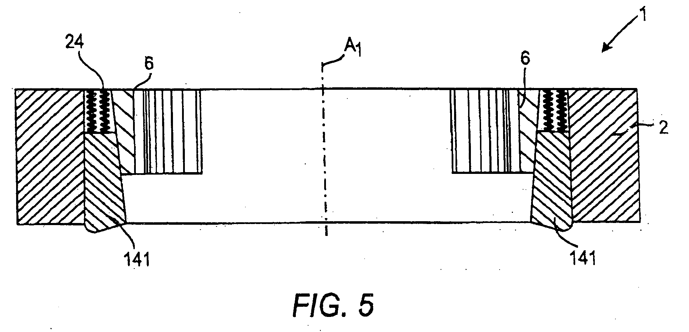

Figure 5 shows another embodiment of the present invention in which the washer is substantially similar to the washer shown in Figure 1b. However, the movable members 141 extend outwardly beyond the second outer surface 4 of the body 2 of the washer, located at an opposite axial side and adapted to cooperate with the object 7, 8. The operation of the washer shown in Figure 5 is substantially identical to the operation of the washer shown in Figures 1, 2.

It is believed to be clear that the washers shown in Figures 1a, 1b, 2a, 2b are formed so that the movable members 14 increase the friction between the segments 6, 6a and the rod 9 when the rod 9 elongates, and decrease the friction between the segments 6, 6a and the rod 9 when the rod relaxes. By pushing the segments 6, 6a into the end 11 of the rod 9, the movable members 14 enhance the friction of the inner segments 6, 6a and wedge the inner segments 6 to the end 11 of the rod 9.

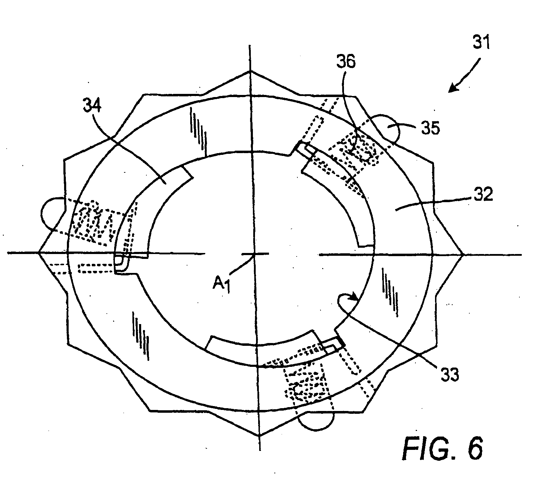

The washer shown in Figure 6 is identified with reference numeral 31 and has a body 32 with an inner surface 33. The washer further has segments 34 which are located inside the body and have outer surfaces cooperating with an inner surface 33 of the body 32. Spring-biased pins 35 cooperate with the segments 34 and form movable members which are substantially similar to the movable members 14 and 14' of Figures 2 and 5. However, if the movable members 14 and 14' extend correspondingly beyond the outer surface 3 and the outer surface 4 of the body 2, the pins 35 extend outwardly beyond a peripheral surface of the body 32. The inner segments 34 can be non-threaded and cooperate with the end 11 of the rod 9 underneath the threaded portion provided for engagement by the nut 13. In other words, the end 11 of the rod 9 can have a threaded portion on which the nut 13 is threaded, and below the threaded portion can also have a non-threaded portion with which the segments 34 cooperate underneath the threaded portion. Before the operation, the springs 36 push the pins 35 radially outwardly, so that the segments 34 are not displaced radially inwardly and the washer can be easily put on the rod 9 by hand. When however the immovable projection 22 of the tool is applied on the body 32 of the washer, the pins 35 are forcedly displaced radially inwardly and the contact between the inner segments 34 and the end 11 of the rod 9 is increased. When it is necessary to remove the washer from the rod, the immovable projection 22 is removed from the body 2 of the washer. The springs 36 push the rods 35 radially outwardly so that the segments 34 reduce the contact with the end 11 of the rod 9, and the washer can be easily taken off by hand.

The pins 35, as mentioned above, extend beyond the outer periphery of the body 2 of the washer 1 and therefore extend over the surface to which the counter holding force is applied by the tool. As can be seen from Figure 6, the inner surface of the body 32 has surface portions which are non-circular with respect to the axis Al, but instead have different radii along each portion of the inner surface, while the segments 33 have cooperating non-circular outer surfaces. Thereby a wedging action is provided during the operation, which moves the segments 34 radially inwardly to increase the contact between the inner surfaces of the segments 34 and the surface of the rod 9.

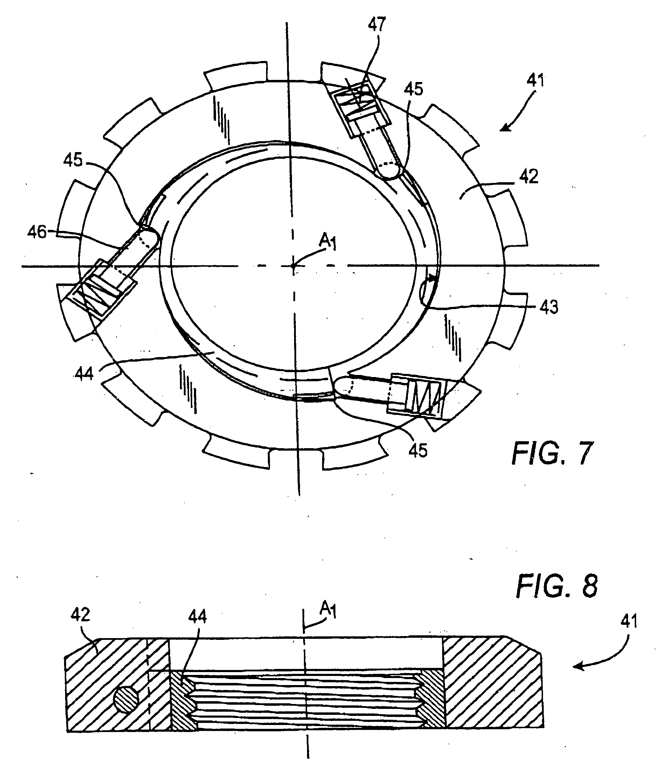

The washer 41 shown in Figures 7 and 8 has a body which is identified with reference numeral 42 and has an inner surface 43. The inner surface 43 of the body 42 can have for example several portions which are non-circular with respect to the axis A₁. The washer further has at least one inner segment 44 having an outer surface substantially corresponding to the inner surface 43 of the body 42. The segment 44 has shoulders with abutment surfaces 45 extending substantially transversely. Pins 46 which are spring-biased by springs 47 apply a corresponding action to the segment 44 to increase the contact of its outer surface with the inner surface 43 of the body 42. While the segment 44 in these figures is shown as a one-piece element, it can be formed of several segment portions of a corresponding shape.

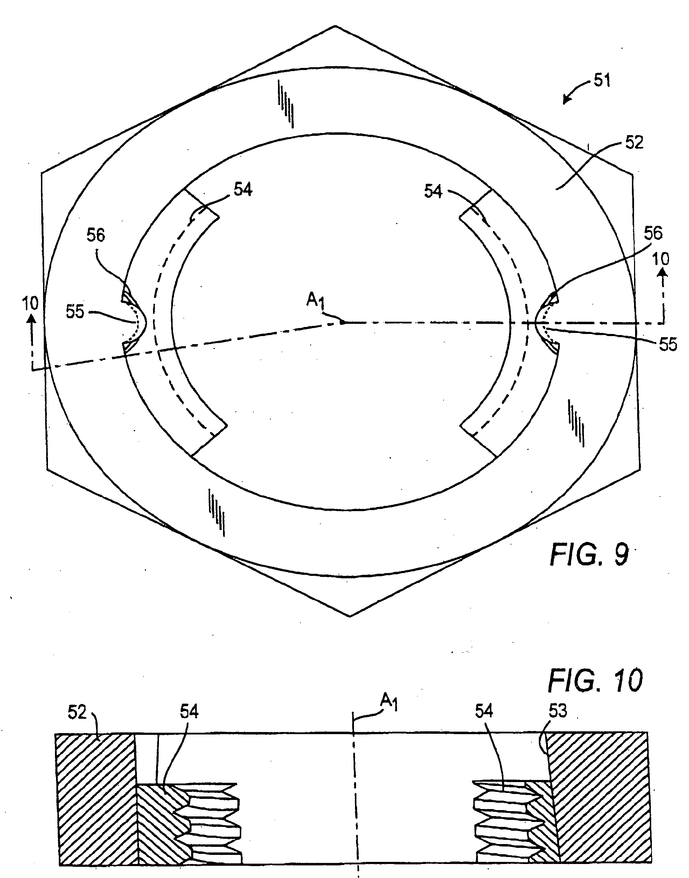

The washer 51 shown in Figures 9 and 10 has a body 52 with an inner surface 53. The washer has segments 54 having an outer surface cooperating with the inner surface 53 of the body 52. The washer is provided with at least one obstacle in the inner surface 53, which is arranged so that the inner segments 54 can not turn freely relative to the inner surface 53. In the embodiment shown in Figures 9 and 10 obstacles are formed by projections 55 which are provided on the inner surface 53 of the body 52 and extend radially inwardly. The projections 55 are received in corresponding recesses 56 formed on the outer surfaces of the inner segments 54. The inner surface 53 of the body 52 and the outer surface of the segments 54 can be inclined relative to the axis A, as shown in Figure 10. The obstacles 55 prevent free turning of the segments 54 relative to the inner surface 53 of the body 52 of the washer, but at the same time allow an axial movement of the inner segments 54 in the axial direction when the rod 9 elongates or relaxes.

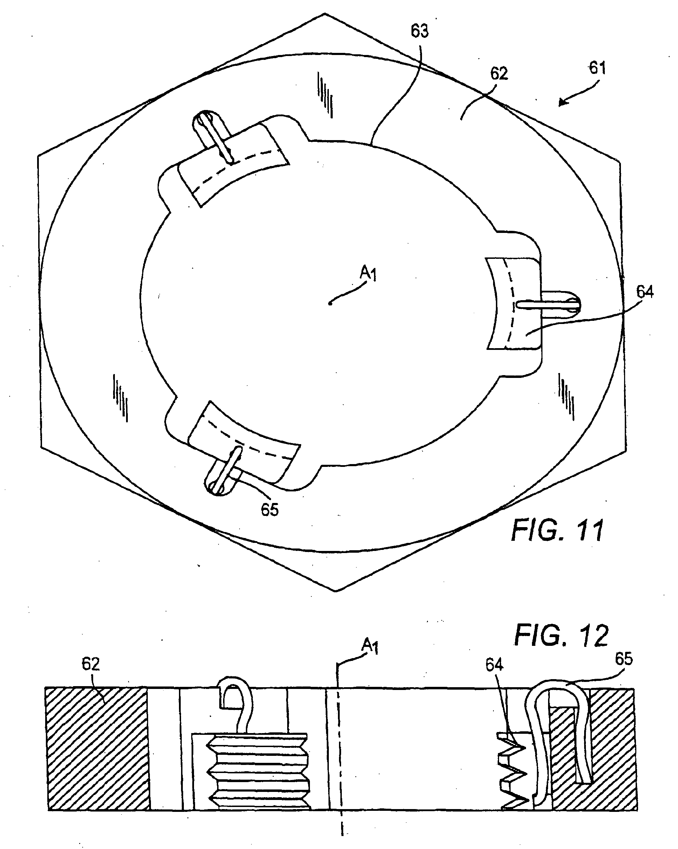

The washer 61 shown in Figures 11 and 12 has a body which is identified with reference numeral 62 and has an inner surface 63 provided for example with some pocket-shaped portions. The washer further has inner segments 64 having an outer surface cooperating with the inner surface 63 of the body 62. In this embodiment the means for changing the contact between the inner segments 64 and the end 11 of the rod 9 include connecting means 65 which connect the inner segments 64 with the body 62 of the washer. The connecting means 64 can be formed for example as clips, each engaging in a corresponding slot provided in the segment 64 and in a corresponding slot provided in the body 62 of the washer 61. The inner leg of the clip 65 is arranged so that it allows the movement of the inner segment 64 in the axial direction when the rod 9 elongates or relaxes, and - at the same time creates the friction between the inner segment 64 and the end 11 of the rod 9.

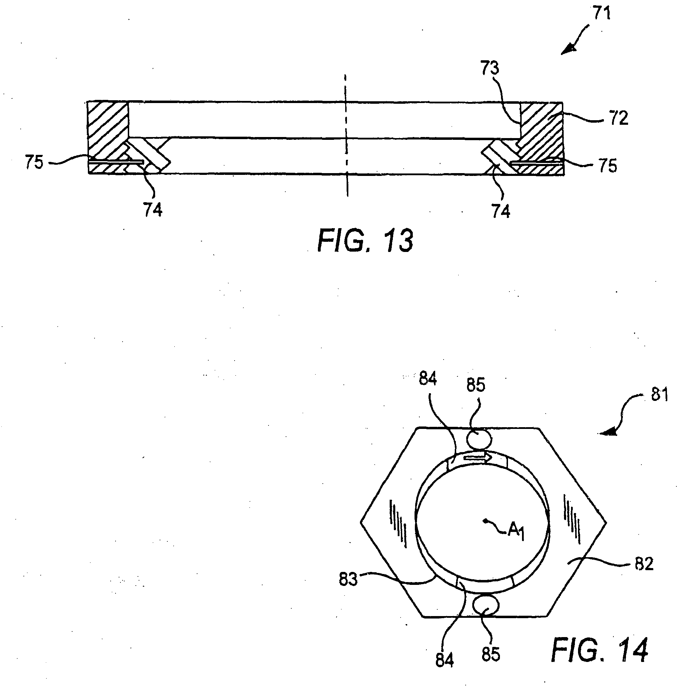

The washer shown in Figure 13 has a washer body 72 with an inner surface 73. The washer further has segments 74 which have an outer surface cooperating with the inner surface 73, for example by knurls provided on these surfaces and press-fit with one another. The washer is further provided with replaceable and breakable pins 75 which extend through corresponding openings in the washer body 72 and in the segments 74 to initially connect them with one another and to create an initial counter nut effect between the thread of the rod and the thread of the segments 74, to stop the rod from turning. When during the operation the rod 9 stops turning and starts elongating, the pins 75 break and the knurled press fit between the washer body 72 and the segments 74 and the inertia that needs to be overcome ensure that the rod does not turn as it is being elongated. The pins 75 form an obstacle provided in the inner surface 73 of the body of the washer and preventing the inner segments 74 from freely moving in the axial direction.

The washer 81 shown in Figure 14 has a body 82 with an inner surface 83 which can have a non-round shape, for example an elliptic shape. The washer further has segments 84 which have an outer surface facing the inner surface 83 of the body. A switching device is further provided, which can be formed by two round switching members 85. The switching members 85 have outer surfaces which cooperate with the outer surfaces of the segments 84, such as for example interengaging small teeth, friction, knurls, etc. By turning of the switching members 85, the segments move in the circumferential direction. When the rod 9 is tightened, the rod wants to turn for example clockwise, and by turning the switching members 85 counterclockwise, the segments 84 turn clockwise, so that they are dragged along by the turning rod 9 until they are wedged to the point that the rod 9 stops turning. During the loosening, the process is reversed.

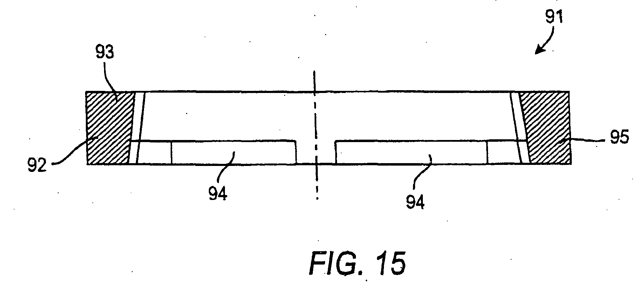

The washer 91 shown in Figure 15 has a body 92 with an inner surface 93. The washer further has segments 94 located inside the body 92. The inner surface 93 of the body 92 cooperates with the outer surface of the segments 94. For this purpose the inner surface 93 of the body 92 and/ or the outer surface of the segments 94 can be provided with interengaging formations formed as knurls, splines, grooves, slots, etc., as identified with reference numeral- 95, without press-fitting with one another. This assures that the segments 94 can not turn inside the body 92 of the washer. When the nut is turned and the turning rod 9 wants to move the segments 94 upwardly, the more the segments move upwardly the more they are pushed into the bolt under the action of, for example, cooperating inclined inner surface 93 of the body 92 and the inclined outer surface of the segments 94. The more the segments move upwards, the more they are pushed into the rod until the rod is stopped from turning. As the segments 94 are pulled upwards by the elongating rod 9, the engagement between the rod 9 and the segments 94 increases accordingly to overcome the increasing drag friction applied to the rod 9 by the nut 13 as the rod elongates and thus the load increases. This approach can be provided on the threaded portion as well as on the non-threaded portion of the rod.

In general, all embodiments shown in the above mentioned figures and described herein above can be used so that the segments cooperate with a non-threaded portion of the rod underneath the nut-engaging portion or with threads underneath the nut-engaging portion of the rod.

It will be understood that each of the elements described above, or two or more together, may also find a useful application in other types of constructions differing from the types described above.

The invention is not intended to be limited to the details of the washers, fasteners provided with washers, methods of and power tools for fastening objects specifically described above and shown in the drawings, since modifications and structural changes may be made without departing in any way from the scope of the appended claims.

## Claims

1. A washer, comprising a body having at least one inner segment arranged to cooperate with a fastener which has a rod with one end connectable toward one side of an object to be tightened or loosened and another end to extend to another side of the object and having at least one thread portion for engagement by a nut, said body being arranged to enhance a cooperation between said at least one inner segment and said another end of the rod underneath said at least one thread portion to create a friction between said at least one inner segment and said another end of the rod, said body having an axis and being provided with a first outer surface located at one axial side and adapted to cooperate with the nut threadingly connected with the rod on said another end, with a second outer surface located at an opposite axial side and adapted to cooperate with the object, and with at least one inner surface adapted to cooperate with said at least one inner segment, so that when a tool is applied and the nut is turned by the tool to overcome a thread friction with the rod, and the rod wants to turn along while a holding force holds said body stationary, said at least one inner segment stops the rod from turning so that any further turning of the nut elongates or relaxes the rod in an axial direction to tighten or loosen the rod by elongating or relaxing the rod.

2. A washer as defined in claim 1, wherein said at least one inner segment is replaceable with another inner segment.

3. A washer as defined in claim 1 or 2, wherein said at least one inner segment is arranged so that it cooperates with a threaded portion underneath the at least one thread portion for engagement by the nut.

4. A washer as defined in claim 1 or 2, wherein said at least one inner segment is formed so that it cooperates with a non-threaded portion underneath the at least one thread portion for engagement by the nut.

5. A washer as defined in claim 1, wherein said at least one inner segment is formed as a segment selected from the group consisting of a first segment formed to cooperate with a threaded portion underneath the at least one thread portion for engagement by the nut and a second segment formed to cooperate with a non-threaded portion underneath the at least one thread portion for engagement by the nut, one of said first and second segments being arranged in said body replaceably by another of said first and second segment, and vice versa.

6. A washer as defined in any preceding claim, wherein said body and said at least one inner segment are formed so that a friction between said at least one inner segment and the other end of the rod during installation of the washer on the rod is lower than the friction between said at least one inner segment and the other end of the rod after the washer is installed on the rod to permit putting the washer on the rod by hand.

7. A washer as defined in any preceding claim, wherein said at least one inner segment and said body are formed so that the friction between said at least one inner segment and the other end of the rod during removal of the washer from the rod is smaller than the friction between said at least one inner segment and the rod after the washer is installed on the rod, to permit taking the washer off by hand.

8. A washer as defined in any preceding claim; and further comprising means for creating the friction between said at least one inner segment and the other end of the rod, to change a contact between said at least one inner segment and the other end of the rod.

9. A washer as defined in claim 8, wherein said means includes at least one movable member with at least one portion of said at least one movable member extending outwardly beyond a contour of said body and arranged so as to bring said at least one inner segment in a closer contact with the other end of the rod when said movable member is pushed toward said at least one inner segment.

10. A washer as defined in claim 9, wherein said at least one movable member is formed so as to decrease the contact between said at least one inner segment and the other end of the rod when the washer is applied onto or taken off the rod.

11. A washer as defined in claim 9 or 10, wherein said at least one movable member extends over said first outer surface of said body, so that when a nut is turned onto said first outer surface, said at least one movable member is pushed inwardly towards said at least one inner segment.

12. A washer as defined in claim 9 or 10, wherein said body has a side to which the holding force is applied, said at least one movable member being formed so that it extends over said side to which the holding force is applied, so that when the holding force is applied, said at least one movable member is pushed inwards toward said at least one inner segment.

13. A washer as defined in claim 9 or 10, wherein said at least one movable member is formed so that it extends over said second outer surface of said body, so that when the nut is turned and presses said body onto the object, said at least one movable member is pushed inwards towards said at least one inner segment.

14. A washer as defined in any one of claims 8 to 13, wherein said means includes at least one spring.

15. A washer as defined in claim any one of claims 8 to 13, wherein said means includes at least one spring located between said body and said at least one inner segment.

16. A washer as defined in claim 8, wherein said means includes at least one obstacle in said inner surface of the body and arranged so that said at least one inner segment can not turn freely relative to said inner surface.

17. A washer as defined in any one of claims 8 to 16, wherein said means is formed so that said at least one inner segment can not move freely in the axial direction.

18. A washer as defined in any one of claims 8 to 17, wherein said means is formed so that said means increases the friction as the rod elongates.

19. A washer as defined in any one of claims 8 to 18, wherein said means is formed so that said means decreases the friction as the rod relaxes.

20. A washer as defined in claim 8, wherein said means includes a switch arrangement operative for changing said contact.

21. A washer as defined in claim 8, wherein said means includes a connecting means between said body and said at least one inner segment and creating the friction between said at least one inner segment and the other end of the rod.

22. A washer as defined in any preceding claim, wherein said at least one inner surface of said body is shaped as a non-circular surface relative to said axis, so that when said at least one inner segment has a tendency to turn along with the rod said at least one inner segment is wedged between said non-circular surface of said body and the other end of the rod.

23. A washer as defined in any preceding claim, wherein said at least one inner surface is formed as a wedging surface in said axial direction to apply a wedging effect to said at least one inner segment so that when the rod has a tendency to turn in said at least one inner segment and when as a result said at least one inner segment has a tendency to start moving in said axial direction, said at least one inner segment is wedged between said inner surface of said body and the other end of rod.

24. A washer as defined in claim 1, wherein said inner surface of said body is formed so that it does not permit said at least one inner segment to turn relative to said body.

25. A washer as defined in claim 1 or 24, wherein said at least one inner segment is spring-loaded to frictionally connect with said inner surface of said body and the other end of the rod.

26. A washer as defined in claim 8, wherein said means is formed so that it is manually engageable.

27. A washer as defined in claim 8, wherein said means is formed so that it does not permit said at least one inner segment to turn relative to said body.

28. A washer as defined in claim 8, wherein said means is formed so that it provides a friction between said means and said at least one inner segment.

29. A washer as defined in claim 8, wherein said at least one means is formed so that it pushes said at least one inner segment into the other end of the rod to wedge said at least one segment in the other end of the rod.

30. A washer as defined in claim 9, wherein said at least one movable member is arranged so that it provides a force to said at least one inner segment when pushed towards said at least one inner segment so as to provide the friction to the other end of the rod while the object is tightened or loosened and to release the friction to the other end of the rod when the nut is loose and said at least one movable member extends outwardly beyond the contour of said body again so that said body can be taken off by hand.

31. A washer as defined in any preceding claim, wherein said body has a surface to which the holding force is applicable by a tool which also applies a turning force to the nut.

32. A washer as defined in any preceding claim, wherein said second outer surface of said body is frictionally enhanced.

33. A washer as defined in any preceding claim, wherein said first outer surface of said body is frictionally reduced.

34. A fastener, comprising a rod having one end to be connectable toward one side of an object to be tightened or loosened and another side extendable to another end of the object and having at least one thread portion; a nut engaging said at least one thread portion of said rod; and a washer according to any preceding claim.

35. A method of tightening and loosening a fastener in an object, comprising the steps of applying a fastener having a rod with one end connectable toward one side of the object to be tightened or loosened and with another end extendable to another side of the object and having at least one thread portion for engagement by a nut; applying to said another end of the rod a washer according to any one of claims 1 to 33; connecting the nut with the at least one thread portion on the another end of the rod so as to cooperate with the first outer surface of the body, located at one axial side of the washer; providing the cooperation of the washer with the object to be tightened and loosened by a second outer surface of the body located at an opposite axial side of the washer; applying by a tool a turning force to the nut to overcome a thread friction with the rod while the rod wants to turn along, and applying by the tool a holding force to the body of the washer to hold the body stationary, so that said at least one inner segment stops the rod from turning and any further turning of the nut elongates and relaxes the rod in an axial direction to tighten or loosen the rod by elongating or relaxing the rod.

36. A power tool, comprising a fastener part including a rod having one end connectable toward one side of an object to be tightened or loosened and another end extendable to another side of the object and having at least one thread portion, a nut engageable with said at least one thread portion of said rod, and a washer according to any one of claims 1 to 33.
